# EUROPÄISCHE PATENTSCHRIFT

(11) **EP 1 034 959 B1**
(45) Veröffentlichungstag und Bekanntmachung des Hinweises auf die Patenterteilung: **18.08.2004**
(21) Anmeldenummer: 00104884.2
(22) Anmeldetag: 08.03.2000
(51) Int. Cl.: B60K 15/04

(54) **Verschluss an einem Einfüllstutzen eines Behälters, insbesondere an einem Kraftfahrzeug**
Closure for filler neck of a container, especially of a motor vehicle
Fermeture de la tubulure de remplissage d'un réservoir, notamment pour véhicule automobile

(30) Priorität: 12.03.1999 DE 19911069
(43) Veröffentlichungstag der Anmeldung: 13.09.2000
(73) Patentinhaber: Bayerische Motoren Werke Aktiengesellschaft, 80809 München (DE); REUTTER, Heinrich, 71336 Waiblingen-Hohenacker (DE)
(72) Erfinder: Temmesfeld, Axel, 83064 Raubling (DE); Gscheider, Werner, 85459 Berglern-Mitterlem (DE); Schiecke, Doris, 82327 Tutzing (DE); Reutter, Heinrich, 71336 Waiblingen (DE)

(56) Entgegenhaltungen:
- EP-A- 0 545 813
- DE-A- 19 517 542
- FR-A- 669 510

## Beschreibung

Die Erfindung betrifft einen Verschluß an einem Einfüllstutzen eines Behälters, insbesondere an einem Kraftfahrzeug, mit den im Oberbegriff des Patentanspruches 1 angegebenen Merkmalen. Ein solcher Verschluß ist zum Beispiel aus der DE-A-195 17 542 bekannt.

Ein derartiger Verschluß ist auch in der EP 0 545 813 B1 an dem Einfüllstutzen eines Kraftfahrzeugtanks vorgesehen und weist einen ring- oder topfförmigen Deckelträger auf, der mit einem Randbereich des Einfüllstutzens verbunden ist. An dem Dekkelträger ist über ein Scharnier schwenkbar ein Deckelteil befestigt, das an seiner Innenseite eine Verschlußeinheit stützt. Bei in eine Schließbereitschaftslage vor die Einfüllöffnung des Einfüllstutzens geschwenktem Deckelteil kann die Verschlußeinheit über einen Schlüssel um die Achse der Einfüllöffnung in eine Schließlage gedreht werden, in der eine Dichtfläche der Verschlußeinheit an einer Gegendichtfläche an dem Einfüllstutzen anliegt und die Einfüllöffnung beispielsweise bis zu einem vorgegebenen Druck im Kraftfahrzeugtank abdichtet. Der zum schlüsselbetätigten Verdrehen der Verschlußeinheit erforderliche Schließzylinder erhöht die Herstellkosten des Verschlusses, der ohne einen passenden Schlüssel nicht zu öffnen ist.

Der Erfindung liegt die Aufgabe zugrunde, einen Verschluß an einem Einfüllstutzen eines Behälters mit den Merkmalen im Oberbegriff des Patentanspruches 1 anzugeben, der in einfacherer Weise ein Verschließen der Einfüllöffnung des Einfüllstutzens ermöglicht.

Diese Aufgabe ist durch die im Patentanspruch 1 angegebenen Merkmale gelöst. Vorteilhafte Ausgestaltungen der Erfindung sind den Unteransprüchen entnehmbar.

Nachdem das Deckelteil drehfest mit der Verschlußeinheit verbunden ist, kann nach dem Einschwenken des Deckelteiles vor die Einfüllöffnung in die Schließbereitschaftslage das Deckelteil zusammen mit der daran abgestützten Verschlußeinheit um die Achse der Einfüllöffnung in die Schließlage der Verschlußeinheit gedreht werden, in der die Einfüllöffnung verschlossen ist. Für das Verdrehen des Deckelteiles zusammen mit der Verschlußeinheit ist lediglich eine geringe manuelle Kraft an der Umfangsfläche des Deckelteiles erforderlich, die sich durch Vergrößerung des radialen Abstandes der Umfangsfläche von der Achse der Einfüllöffnung noch vermindern läßt. Die Verschlußeinheit kann einen üblichen Bajonett- bzw. Renkverschluß aufweisen, der beim Verdrehen der Verschlußeinheit in die Schließlage eine Dichtfläche der Verschlußeinheit axial vor eine Gegendichtfläche an dem Einfüllstutzen verstellt. Der Deckelträger oder ein an dem Deckelträger axial fixiertes und in Umfangsrichtung gegenüber dem Deckelträger verdrehbares Zwischenteil ist vorzugsweise lösbar beispielsweise über eine Schnapp- oder Rastverbindung an dem Einfüllstutzen befestigt. Der Verschluß kann in einfacher Weise ausgetauscht oder an einem anderen Einfüllstutzen nachgerüstet werden. Das Deckelteil kann auf unterschiedliche Weise über ein einfaches oder aufwendigeres Scharnier mit dem Deckelträger verbunden sein. Bei einer einfachen Ausführung ist das Deckelteil über eine Achse schwenkbar mit dem Deckelträger verbunden Eine Ausgestaltung der Erfindung sieht vor, daß die Schwenkachse durch eine einfache Bolzenaufnahme vorzugsweise an dem Deckelträger gebildet ist, in die ein an dem Deckel abgestützter Bolzen beispielsweise über eine radiale, in die Bolzenaufnahme mündende Eintrittsöffnung einzubringen ist Weist die Eintrittsöffnung eine gegenüber dem Durchmesser des Bolzens geringere Weite auf, so kann der Bolzen in die Bolzenaufnahme rastend einschnappen und ist dann von einem größeren Umfangsbereich der Bolzenaufnahme festgehalten.

Zwei Ausführungsbeispiele der Erfindung werden anhand einer Zeichnung näher erläutert. Es zeigen
- Figur 1: ein erstes Ausführungsbeispiel des geöffneten Verschlusses mit seinen wesentlichen Teilen,
- Figur 2: den Verschluß in Figur 1 in seiner Schließlage und
- Figur 3: ein zweites Ausführungsbeispiel in einem Ausschnitt um die Schwenkachse des geschlossenen Deckelteiles.

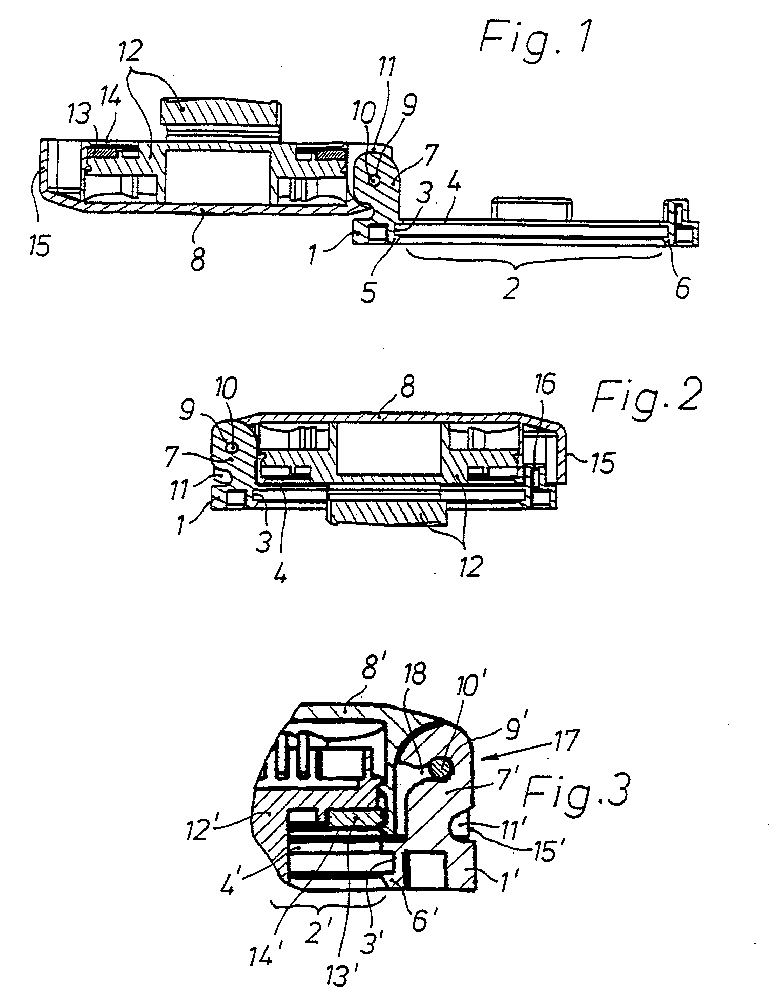

Der in Figur 1 gemäß einem ersten Ausführungsbeispiel mit seinen wesentlichen Teilen vereinfacht abgebildete Verschluß ist an dem nicht dargestellten Einfüllstutzen eines an einem Kraftfahrzeug vorgesehenen Öl- oder Tankbehälters oder dergleichen zu befestigen. Der Verschluß weist einen ringförmigen Deckelträger 1 auf, der am Innenumfang seiner zentralen Durchtrittsöffnung 2 eine radiale Nut 3 aufweist, die axial von einer festen Wand 4 und gegenüberliegend von am Innenumfang der Durchtrittsöffnung 2 verteilt angeordneten, radial nach innen vorstehenden elastischen Federnasen 5, 6 begrenzt ist. In die Nut 3 ist in der Figur von unten ein nicht dargestellter Wandbereich des Einfüllstutzens bis zum Anliegen an der festen Wand 4 einsteckbar, der dann an seinem Randwulst von den radial elastischen Federnasen 5 hintergriffen wird, wodurch der Deckelträger 1 an dem Einfüllstutzen festgehalten ist. Der Deckelträger 1 weist in einem radial äußeren Bereich einen axialen Vorsprung 7 auf, an dem eine Bolzenaufnahme 9 gebildet ist. Ein an dem Deckelteil 8 abgestützter Bolzen 10 durchsetzt die Bolzenaufnahme 9 axial und bildet eine Schwenkachse, um die das Deckelteil 8 schwenkbar ist. Der axiale Vorsprung 7 ragt in eine radiale Eckausnehmung im Deckelteil 8, das topfförmig mit einer etwa viereckigen Umfangskontur und gerundeten bzw. abgeschrägten Ecken ausgebildet ist. An der Innenseite des Deckelteiles 8 ist eine Verschlußeinheit 12 abgestützt, die drehfest mit dem Deckelteil 8 verbunden ist und einen nicht dargestellten Bajonett- bzw. Renkverschluß sowie ein elastisches Dichtteil 13 mit einer Dichtfläche 14 aufweist.

Ist das Deckelteil 8 wie in Figur 2 dargestellt um den Bolzen 10 in die abgebildete Schließbereitschaftslage vor die nicht näher angegebene Einfüllöffnung des Einfüllstutzens geschwenkt, überdeckt die dem Deckelträger 1 zugewandte Umfangswand 15 des Deckelteiles 8 den zugewandten Stirnbereich 16 des Deckelträgers 1. Der axiale Vorsprung 7 ist kaum sichtbar, da er in der Eckausnehmung 11 weitgehend verdeckt angeordnet ist. Aus dieser Schließbereitschaftslage kann an der Umfangswand 15 des Deckelteiles 8 durch eine entsprechende manuelle Umfangskraft ein Drehmoment bewirkt werden, das eine Drehbewegung der aus dem Deckelteil 8, dem Deckelträger 1 und der Verschlußeinheit 12 gebildeten Baueinheit um die Achse der Einfüllöffnung in eine Schließlage bewirkt, in der die Dichtfläche 14 des Dichtteiles 13 an einer Gegendichtfläche im Randbereich des Einfüllstutzens abdichtend anliegt. Bei dieser Drehbewegung des Verschlusses von der Schließbereitschaftslage in die Schließlage wird über den Bajonett- bzw. Renkverschluß, der beispielsweise zwei radial vorstehende elastische Nasen aufweist, die mit Schrägflächen an dem Einfüllstutzen zusammenwirken, die Dichtfläche 13 der Verschlußeinheit 12 etwas axial zu der Gegendichtfläche am Einfüllstutzen verstellt, wodurch in der Schließlage die Dichtfläche 13 unter einer Vorspannung an der Gegendichtfläche des Einfüllstutzens anliegt und die Einfüllöffnung zumindest bis zu einem vorgegebenen Innendruck in dem von dem Verschluß zu verschließenden Behälter abdichtet.

Das in Figur 3 dargestellte zweite Ausführungsbeispiel ist ähnlich wie das erste Ausführungsbeispiel gebildet. Zur Vermeidung einer wiederholten Beschreibung sind zwischen den beiden Ausführungsbeispielen vergleichbare Bauteile mit einer gleichen Bezugszahl und in Figur 3 mit einem hochgestellten Zeichen versehen. Bei diesem Ausführungsbeispiel ist das Deckelteil 8' über eine Schnappverbindung 17 mit dem axialen Vorsprung 7' des Deckelträgers 1' verbunden. Hierzu mündet in die Bolzenaufnahme 9' des Deckelträgers 1' radial von innen eine gegenüber dem Durchmesser der Bolzenaufnahme 9' kleinere Eintrittsöffnung 18. Der am Deckelteil 8' befestigte Bolzen 10' kann unter radialer Aufweitung der Eintrittsöffnung 18 durch diese hindurch in die Bolzenaufnahme 9' rastend einschnappen, die den Bolzen 10' dann über einen größeren Umfangsbereich stützt. Beispielsweise im Reparaturfall kann durch eine entsprechende Kraftanwendung der Bolzen 10' durch die Eintrittsöffnung 18 aus der Bolzenaufnahme 9' entfernt und damit das Deckelteil 8' von dem Deckelträger 1' getrennt werden. Bei der zweiten Ausführung ist der Bolzen 10' einstückig mit dem Deckelteil 8' verbunden gefertigt. Der für das Deckelteil 8' und den Bolzen 10' verwendete Werkstoff ist beispielsweise ein spritzgießfähiger Kunststoff.

Bei beiden Ausführungsbeispielen ist die Drehbewegung des kompletten Verschlusses um die Achse der Einfüllöffnung des Einfüllstutzens zwischen der Schließbereitschaftslage und der Schließlage bzw. umgekehrt von nicht dargestellten Anschlägen auf einen Verdrehwinkel von etwa 135° begrenzt. Außerdem sind an dem Deckelträger und/oder an dem Einfüllstutzen nicht dargestellte Montagehilfsflächen und an dem anderen Teil, an dem Einfüllstutzen oder Deckelträger, Gegenflächen oder Ausnehmungen ausgebildet, die zusammenwirkend sicherstellen, daß sich der Deckelträger lediglich in einer vorgegebenen Winkellage oder in einem Winkellagenbereich an dem Einfüllstutzen montieren läßt, in dem das Deckelteil bei einer die Einfüllöffnung öffnenden Schwenkbewegung um die Achse des Bolzens nicht an einem Wandbereich in der Umgebung der Einfüllöffnung anschlagen und diesen beschädigen kann.

Bei den beiden Ausführungsbeispielen ist der Deckelträger an dem Einfüllstutzen befestigt. Ebenso kann ein anderes Teil beispielsweise ein Zwischenteil an dem Einfüllstutzen zu befestigen sein, an dem der Deckelträger direkt oder unter Zwischenschaltung weiterer Teile axial fixiert und um die Achse der Einfüllöffnung verdrehbar abgestützt ist. Der Deckelträger oder das Zwischenteil ist vorzugsweise lösbar mit dem Einfüllstutzen zu verbinden. Ebenso ist eine feste Verbindung des Deckelträgers oder des Zwischenteiles mit dem Einfüllstutzen möglich. Die Form des Deckelträgers und/oder des Deckelteiles bzw. des Zwischenteiles ist der Wahl des Fachmannes überlassen. Anstelle des bevorzugten Bajonett- bzw. Renkverschlusses kann die Verschlußeinheit auch einen anderen Verschluß aufweisen, der zum Verschließen der Einfüllöffnung eines Einfüllstutzens an einem beliebigen Behälter geeignet ist.

## Patentansprüche

1. Verschluss an einem Einfüllstutzen eines Behälters, insbesondere an einem Kraftfahrzeug, mit einem ring- oder topfförmigen Deckelträger (1, 1'), der mit seiner zentralen Durchtrittsöffnung (2, 2') über der Einfüllöffnung des Einfüllstutzens angeordnet und mit einem Randbereich des Einfüllstutzens verbunden ist, und einem über ein Scharnier(9, 10 bzw. 9', 10'), das eine tangential zur Einfüllöffnung verlaufende Scharnierachse (10, 10') aufweist, schwenkbar an dem Deckelträger (1, 1') befestigten Deckelteil (8, 8'), an dessen Innenseite eine Verschlusseinheit (12, 12') abgestützt ist, die eine axiale Dichtfläche (14, 14') aufweist, die bei einer Schwenkbewegung des Deckelteiles (8, 8') um die Scharnierachse (10, 10') in eine Schließbereitschaftslage zu einer Gegendichtfläche an dem Einfüllstutzen verstellt wird und nach einer um die Achse der Einfüllöffnung ausgeführten Drehbewegung der Verschlusseinheit (12,12') aus der Schließbereitschaftslage in eine Schließlage abdichtend an der Gegendichtfläche anliegt, **dadurch gekennzeichnet, dass** die Verschlusseinheit (12, 12') um die Achse der Einfüllöffnung drehfest mit dem Deckelteil (8, 8') verbunden ist und sich bei einer manuellen Drehbewegung des Deckelteiles (8, 8') aus der Schließbereitschaftslage in die Schließlage und umgekehrt das Deckelteil (8, 8') zusammen mit dem Deckelträger (1, 1') und der Verschlusseinheit (12, 12') um die Achse des Einfüllstutzens verdreht.

2. Verschluß nach Anspruch 1, **dadurch gekennzeichnet, daß** die Verschlußeinheit (12, 12') mit dem Randbereich des Einfüllstutzens über einen Bajonett- bzw. Renkverschluß verbindbar ist, der die Dichtfläche (14, 14') bei der Drehbewegung der Verschlußeinheit (12, 12') aus der Schließbereitschaftslage in die Schließlage axial zu der Gegendichtfläche verstellt.

3. Verschluß nach Anspruch 1 oder 2, **dadurch gekennzeichnet, daß** der Deckelträger (1, 1') direkt oder über ein Zwischenteil, an dem der Deckelträger (1, 1') axial fixiert und um die Achse der Einfüllöffnung drehbar abgestützt ist, mit dem Randbereich des Einfüllstutzens verbunden ist.

4. Verschluß nach Anspruch 3, **dadurch gekennzeichnet, daß** der Deckelträger (1, 1') bzw. das Zwischenteil eine radiale Nut (3, 3') aufweist, die axial von einer festen Wand (4, 4') und axial gegenüberliegend von einem radial elastischen Rand oder von am Umfang verteilt angeordneten radial elastischen Fedemasen (5, 6, 6') begrenzt ist, der bzw. die einen radial vorstehenden Wandbereich des Einfüllstutzens axial hintergreifen, wenn der Wandbereich des Einfüllstutzens bis zum Anliegen an der festen Wand (4, 4') axial in die Nut (3, 3') eingesteckt ist.

5. Verschluß nach einem der Ansprüche 1 bis 4, **dadurch gekennzeichnet, daß** das Deckelteil (8, 8') in einem radial äußeren Bereich des Deckelträgers (1, 1') um eine Schwenkachse (Bolzen 10, 10') schwenkbar ist, die an einem axialen Vorsprung (7, 7') des Deckelträgers (1, 1') ausgebildet ist.

6. Verschluß nach Anspruch 5, **dadurch gekennzeichnet, daß** der Vorsprung (7, 7') in eine radiale Eckausnehmung (11, 11') im Deckelteil (8, 8') eingreift.

7. Verschluß nach Anspruch 5 oder 6, **dadurch gekennzeichnet, daß** in dem Vorsprung (7, 7') eine Bolzenaufnahme (9, 9') ausgebildet ist, die von einem an dem Deckelteil (8, 8') befestigten Bolzen (10, 10') durchsetzt ist.

8. Verschluß nach Anspruch 7, **dadurch gekennzeichnet, daß** der Bolzen (10') einstückig mit dem Deckelteil (8') gefertigt ist.

9. Verschluß nach Anspruch 7 oder 8, **dadurch gekennzeichnet, daß** in die Bolzenaufnahme (9') eine gegenüber dem Durchmesser der Bolzenaufnahme (9') kleinere Eintrittsöffnung (18) mündet, durch die der Bolzen (10') unter radial elastischer Aufweitung der Eintrittsöffnung (18) in die Bolzenaufnahme (9') rastend einschnappen kann, die den Bolzen (10') dann über einen größeren Umfangsbereich stützt.

10. Verschluß nach einem der Ansprüche 1 bis 9, **dadurch gekennzeichnet, daß** der Deckelträger (1, 1') in einem von Anschlägen begrenzten Winkelbereich um die Achse der Einfüllöffnung zwischen der Schließlage und der Schließbereitschaftslage verdrehbar ist.

11. Verschluß nach einem der Ansprüche 1 bis 10, **dadurch gekennzeichnet, daß** an dem Deckelträger (1, 1') und/oder an dem Einfüllstutzen Montagehilfsflächen und an dem anderen Teil, an dem Einfüllstutzen oder Deckelträger, Gegenflächen oder Ausnehmungen ausgebildet sind, die zusammenwirkend sicherstellen, daß sich der Deckelträger (1, 1') lediglich in einer Winkellage oder in einem vorgegebenen Winkellagenbereich an dem Einfüllstutzen montieren läßt, wodurch das Deckelteil (8, 8') bei einer die Einfüllöffnung öffnenden Schwenkbewegung nicht an einem Wandbereich in der Umgebung der Einfüllöffnung anschlagen und diesen beschädigen kann.

## Claims

1. A closure means on a filler neck of a container, especially on a motor vehicle, comprising an annular or pot-shaped lid holder (1, 1') disposed with its central passage opening (2, 2') over the opening of the filler nozzle and connected to an edge region of the filler nozzle, and also comprising a lid part (8, 8') pivotably connected to the lid holder (1, 1') by a hinge (9, 10 or 9', 10') having an axis (10, 10') at a tangent to the filling opening, a closure unit (12, 12') being braced against the inside of the cover part and having an axial sealing surface (14, 14') which, when the cover part (8, 8') pivots around the axis (10, 10') into a ready-to-close position, is moved relative to a co-operating sealing surface on the filler neck and, after a rotary motion of the closure unit (12, 12') around the axis of the filling opening, leaves the ready-to-close position and abuts the co-operating sealing surface in sealing tight manner in the closed position, **characterised in that** the closure unit (12, 12') is co-rotatably connected to the lid part (8, 8') around the axis of the filling opening and when the lid part (8, 8') is manually rotated from the ready-to-close position into the closed position or vice versa, the lid part (8, 8') together with the lid holder (1, 1') and the closure unit (12, 12') rotates around the axis of the filler neck.

2. A closure means according to claim 1, **characterised in that** the closure unit (12, 12') is connectable to the edge region of the filler nozzle via a bayonet catch or bayonet-type cap which, on rotation of the closure unit (12, 12') moves the sealing surface (14, 14') from the ready-to-close position into the closed position axially towards the co-operating sealing surface.

3. A closure means according to claim 1 or claim 2, **characterised in that** the lid holder (1, 1') is connected to the edge region of the filler nozzle directly or via an intermediate part on which the lid holder (1, 1') is axially fixed and braced so as to be rotatable around the axis of the filling opening.

4. A closure means according to claim 3, **characterised in that** the lid holder (1, 1') or the intermediate part has a radial groove (3, 3') which is axially bounded by a fixed wall (4, 4') and axially opposite by a radially elastic edge or by radially elastic spring lugs (5, 6, 6') distributed around the periphery, which engage axially behind a radially projecting wall region of the filler nozzle when the wall region of the filler nozzle is inserted into the groove (3, 3') until it abuts the fixed wall (4, 4').

5. A closure means according to any of claims 1 to 4, **characterised in that** the lid part (8, 8') is pivotable in a radially outer region of the lid holder (1, 1') around an axis (pin 10, 10') formed on an axial projection (7, 7') on the lid holder (1, 1').

6. A closure means according to claim 5, **characterised in that** the projection (7, 7') engages in a radial corner recess (11, 11') in the lid part (8, 8').

7. A closure means according to claim 5 or claim 6, **characterised in that** a pin receiver (9, 9') is formed in the projection (7, 7') and through it a pin (10, 10') fastened to the roof part (8, 8') extends.

8. A closure means according to claim 7, **characterised in that** the pin (10') is made integrally with the lid part (8').

9. A closure means according to claim 7 or claim 8, **characterised in that** an inlet opening (18) smaller than the diameter of the pin receiver (9') opens into the pin receiver (9') and through it the pin (10') can radially elastically widen the inlet opening (18) and engage and snap into the receiver (9'), which then supports the pin (10') over a larger peripheral region.

10. A closure means according to any of claims 1 to 9, **characterised in that** the lid holder (1, 1') is rotatable between the closed position and the ready-to-close position around the axis of the filling opening over an angular range limited by stops.

11. A closure means according to any of claims 1 to 10, **characterised in that** assembly aid surfaces are formed on the lid holder (1, 1') and/or on the filler neck and co-operating surfaces or recesses are formed on the other part on the filler neck or lid holder and in co-operation ensure that the lid holder (1, 1') can be fitted on the filler nozzle only in one angular position or in one preset range of angular positions, with the result that in the event of a pivoting motion for opening the filling opening, the cover part (8, 8') cannot strike and damage a wall region in the neighbourhood of the filling opening.

## Revendications

1. Fermeture sur un goulot de remplissage d'un réservoir, en particulier sur un véhicule automobile, comportant un support de bouchon (1, 1') en forme d'anneau ou de creuset qui par son ouverture de passage (2, 2') centrale est disposé au-dessus de l'orifice de remplissage du goulot de remplissage et est relié à une zone de bord du goulot de remplissage et comportant une partie de bouchon (8, 8') fixée au support de bouchon (1, 1') de façon à pouvoir pivoter par l'intermédiaire d'une charnière (9, 10 ou 9', 10') munie d'un axe de charnière (10, 10') qui s'étend tangentiellement par rapport à l'orifice de remplissage, alors que sur la face intérieure de la partie de bouchon s'appuie une unité de fermeture (12, 12') munie d'une surface étanche (14, 14') axiale qui, lorsque la partie de bouchon (8, 8') exécute un mouvement de pivotement autour de l'axe de charnière (10, 10'), est déplacée dans une position préparatoire de fermeture vers une surface étanche opposée sur le goulot de remplissage et s'applique à la surface étanche opposée en la rendant étanche après que l'unité de fermeture (12, 12') a exécuté un mouvement de rotation autour de l'axe de l'orifice de remplissage depuis la position préparatoire de fermeture jusque dans une position de fermeture,
**caractérisée en ce que**
l'unité de fermeture (12, 12') est reliée à la partie de bouchon (8, 8') de façon à tourner solidairement autour de l'axe de l'orifice d'entrée et, lorsqu'on applique à la main un mouvement de rotation à la partie de bouchon (8, 8') depuis la position préparatoire de fermeture jusque dans la position de fermeture et inversement, la partie de bouchon (8, 8') ainsi que le support de bouchon (1, 1') et l'unité de fermeture (12, 12') tourne autour de l'axe du goulot de remplissage.

2. Fermeture selon la revendication 1,
**caractérisée en ce que**
l'unité de fermeture (12, 121 peut être reliée à la zone de bord du goulot de remplissage par l'intermédiaire d'un joint à baïonnette qui déplace axialement la surface étanche (14, 14') vers la surface étanche opposée lorsque l'unité de fermeture (12, 12') est soumise à un mouvement de rotation depuis la position préparatoire de fermeture jusque dans la position de fermeture.

3. Fermeture selon la revendication 1 ou 2,
**caractérisée en ce que**
le support de bouchon (1, 1') est relié à la zone de bord du goulot de remplissage directement ou au moyen d'une pièce intermédiaire à laquelle le support de bouchon (1, 1') est fixé axialement et est soutenu de façon à pouvoir tourner autour de l'axe de l'orifice de remplissage.

4. Fermeture selon la revendication 3,
**caractérisée en ce que**
le support de bouchon (1, 1') ou la pièce intermédiaire présente une rainure (3, 3') radiale qui est limitée axialement par une paroi (4, 4') fixe et axialement en face par un bord élastique radialement ou par des tenons (5, 6, 6') élastiques radialement, laquelle ou lesquels sont disposés en étant répartis sur le pourtour, le bord ou les tenons élastiques saisissant axialement par l'arrière une zone de paroi en saillie radiale du goulot de remplissage lorsque la zone de paroi du goulot de remplissage est engagée axialement dans la rainure (3, 3') jusqu'à ce qu'elle s'appuie à la paroi (4, 4') fixe.

5. Fermeture selon l'une des revendications 1 à 4,
**caractérisée en ce que**
la partie de bouchon (8, 8') peut pivoter dans une zone extérieure radiale du support de bouchon (1,1') autour d'un axe de pivotement (cheville 10, 10') formé sur une saillie (7, 7') axiale du support de bouchon (1,1').

6. Fermeture selon la revendication 5,
**caractérisée en ce que**
la saillie (7, 7') a prise dans une cavité d'angle (11, 11') radiale située dans la partie de bouchon (8, 8').

7. Fermeture selon la revendication 5 ou 6,
**caractérisée en ce que**
dans la saillie (7, 7') est formé un logement de cheville (9, 9') qui est traversé par une cheville (10, 10') fixée à la partie de bouchon (8, 8').

8. Fermeture selon la revendication 7,
**caractérisée en ce que**
la cheville (10') est fabriquée en une seule pièce avec la partie de bouchon (8').

9. Fermeture selon la revendication 7 ou 8,
**caractérisée en ce que**
dans le logement de cheville (9'} débouche un orifice d'entrée (18), plus petit que le diamètre du logement de cheville (9'), à travers lequel la cheville (10') peut, en élargissant l'orifice d'entrée (18), s'encliqueter par verrouillage dans le logement de cheville (9') qui soutient alors la cheville (10') sur une assez grande zone périphérique.

10. Fermeture selon l'une des revendications 1 à 9,
**caractérisée en ce que**
le support de bouchon (1, 1') peut tourner autour de l'axe de l'orifice de remplissage entre la position de fermeture et la position préparatoire de fermeture dans une gamme angulaire limitée par des butées.

11. Fermeture selon l'une des revendications 1 à 10,
**caractérisée en ce que**
sur le support de bouchon (1, 1') et/ou sur le goulot de remplissage sont formées des surfaces d'aide au montage, et sur l'autre partie, sur le goulot de remplissage ou le support de bouchon, des surfaces opposées ou des cavités qui assurent par leur action conjointe qu'il ne soit possible de monter le support de bouchon (1, 1') sur le goulot de remplissage que dans une position angulaire prédéterminée ou dans une gamme de positions angulaires, ce par quoi la partie de bouchon (8, 8') ne peut pas buter contre une zone de paroi à proximité de l'ouverture de remplissage et l'endommager lorsqu'on exécute un mouvement de pivotement qui ouvre l'orifice de remplissage.
